# EUROPEAN PATENT APPLICATION

(11) **EP 3 666 086 A1**
(43) Date of publication of application: **17.06.2020**
(21) Application number: 18843614.1
(22) Date of filing: 07.08.2018
(51) Int. Cl.: A23L 2/00, A23L 2/52, A23L 2/70, A23L 33/10, A23L 33/125, A23L 33/15, A23L 33/17

(54) **BEVERAGE**

(30) Priority: 10.08.2017 JP 2017155267
(71) Applicant: Société des Produits Nestlé S.A., 1800 Vevey (CH)
(72) Inventor: KUDOH Yuma, Inashiki-shi Ibaraki 300-0622 (JP); KAWANO Mika, Inashiki-shi Ibaraki 300-0622 (JP); SASAKI Jun, Tokyo 140-0002 (JP); KUROKAWA Masayuki, Tokyo 140-0002 (JP)
(74) Representative: Chautard, Cécile
(86) International application number: PCT/JP2018/029678
(87) International publication number: WO 2019/031529

(57) **Abstract**

Provided is a beverage which comprises glucosamine or a salt thereof, calcium, phosphoric acid, malic acid, and citric acid. In this beverage, the content of glucosamine or a salt thereof is 1.0 mass% or greater in terms of glucosamine, the content of calcium is 0.15 mass% or greater, and pH of the beverage is 3.4 or lower.

## Description

### [Technical Field]

The present invention relates to a beverage.

### [Background Art]

Fractures of bones and joint diseases of the elderly are one of the main causes for them to be in need of long-term care. Glucosamine is known as a material which has an effect of improving arthritis.Furthermore, calcium is an important nutrient necessary for bones. The intake of these components tends to be insufficient only from daily meals.

### [Citation List]

### [Patent Literature]

[Patent Document 1] JP 09-255588 A

### [Summary of Invention]

### [Problem to be Solved by the Invention]

Beverages containing glucosamine and calcium have been developed (e.g., Patent Document 1). However, intake of a large amount of beverages in everyday life may be a burden, in particular, for the elderly people. Thus, development of a beverage which contains a high concentration of all of the above components is desirable.

Since glucosamine is unstable at a high pH, the pH of a beverage containing glucosamine needs to be low. As specifically shown in Examples described later, the present inventors have found that even if the pH of a beverage is adjusted to an acidic range, a pH of about 3.6 is still insufficient for stabilizing glucosamine, and the pH needs to be even lower. However, when the pH of the beverage is further lowered, it is likely to cause a precipitate to be formed in the beverage, and also make the beverage bitter and astringent. The obtained beverages are not easy to drink on a daily basis.

An object of the present invention is to provide a beverage which contains a high concentration of glucosamine in a stable condition and a high concentration of calcium, forms few precipitates, and has a good taste.

### [Means for Solving the Problem]

The beverage of the present invention comprises glucosamine or a salt thereof, calcium,phosphoric acid, malic acid, and citric acid, wherein a content of glucosamine or the salt thereof is 1.0 mass% or greater in terms of glucosamine, a content of calcium is 0.15 mass% or greater, and pH of the beverage is 3.4 or lower.

The beverage may comprise glucosamine or a salt thereof in a stable condition and have a good taste with reduced bitterness and astringency. The formation of precipitates may be suppressed in the beverage.

It is preferable that the content of glucosamine or the salt thereof is 1.8 mass% or greater in the beverage.

It is preferable that the content of calcium is 0.25 mass% or greater in the beverage.

The beverage may further comprise one or more components selected from the group consisting of protein, peptide, and amino acid.

It is preferable that the beverage further comprises one or more components selected from the group consisting of collagen, gelatin, collagen peptide, and collagen-derived amino acid.

It is preferable that a total content of the collagen, gelatin, collagen peptide, and collagen-derived amino acid is 4.0 mass% or greater in the beverage.

It is preferable that the pH of the beverage is 3.0 or higher. A pH in the above range makes the taste of the beverage better.

In the beverage, the glucosamine or a salt thereof may be glucosamine hydrochloride.

It is preferable that the content of the phosphoric acid is 0.2 to 3.0 mass% in the beverage.

It is preferable that the content of the malic acid is 0.2 to 2.0 mass% in the beverage.

It is preferable that the content of the citric acid is 0.05 to 1.0 mass% in the beverage.

It is preferable that in the beverage, the content of the phosphoric acid, the malic acid and the citric acid is 40 to 70 mass%, 20 to 50 mass%, and 3 to 20 mass%, respectively, with respect to the total content of phosphoric acid, malic acid, and citric acid.

It is preferable that the beverage further comprises vitamin D.

The beverage may be packaged.

It is preferable that a volume of the beverage is 50 to 100 ml, and the beverage comprises 1,250 mg or greater of glucosamine or a salt thereof in terms of glucosamine, 180 mg or greater of calcium, 3,000 mg or greater of collagen peptide.

### [Advantageous Effect of Invention]

The present invention can provide a beverage which contains a high concentration of glucosamine in a stable condition, contains a high concentration of calcium, forms few precipitates, and has a good taste.

### [Mode for Carrying Out the Invention]

In the following, modes for carrying out the present invention will be described in detail. However, the present invention is not limited to the following embodiments.

The beverage of the present invention comprises glucosamine or a salt thereof, calcium, phosphoric acid, malic acid, and citric acid, wherein the content of glucosamine or the salt thereof is 1.0 mass% or greater in terms of glucosamine, the content of calcium is 0.15 mass% or greater, and the pH of the beverage is 3.4 or less.

The beverage according to the present embodiment contains a high concentration of glucosamine or a salt thereof. The salt of glucosamine may be a pharmaceutically acceptable salt thereof. Examples of such salts include glucosamine hydrochloride and glucosamine sulfate. The source of the glucosamine or a salt thereof is not particularly limited. The glucosamine or a salt thereof may be obtained by extracting chitin from a shell of a crustacean such as shrimp or a crab as a raw material, and hydrolyzing the extract and then purifying the same. Glucosamine or a salt thereof may also be obtained by microbial fermentation, or by deacetylation of N-acetyl glucosamine by a known method. As a salt of glucosamine, glucosamine hydrochloride obtained by hydrolyzing chitin as a raw material with hydrochloric acid is typically used.

The beverage according to the present embodiment comprises 1.0 mass% or greater of glucosamine or a salt thereof in terms of glucosamine. The concentration of glucosamine or a salt thereof in the beverage is preferably 1.5 mass% or greater, and more preferably 1.8 mass% or greater in terms of glucosamine. The concentration of glucosamine or a salt thereof in the beverage may be 2.0 mass% or greater, 2.5 mass% or greater, or 3.0 mass% or greater in terms of glucosamine. The concentration of glucosamine or a salt thereof in the beverage may be, for example, 5.0 mass% or less, 4.0 mass% or less, or 3.5 mass% or less in terms of glucosamine. The concentration of glucosamine in the beverage may be measured by the Rondle-Morgan method.

The beverage according to the present embodiment comprises calcium in a concentration of 0.15 mass% or greater. The concentration of calcium in the beverage according to the present embodiment is preferably 0.2 mass% or greater, more preferably 0.25 mass% or greater, and further preferably 0.28 mass% or greater. The concentration of calcium in the beverage may be, for example, 0.5 mass% or less, 0.4 mass% or less, or 0.3 mass% or less.

Calcium contained in the beverage can be in the form of ions. To blend calcium in the beverage, for example, a calcium salt can be added. Examples of calcium salts added to the beverage include calcium lactate, calcium carbonate, calcium gluconate, calcium citrate, calcium chloride, calcium hydroxide, calcium dihydrogen phosphate, calcined calcium, milk calcium, and whey mineral. Calcium lactate is preferred.

The beverage according to the present embodiment may further comprise one or more components selected from the group consisting of protein, peptide, and amino acid. Though these components tend to have property contributing to higher pH of the beverage, the beverage according to the present embodiment can maintain the pH at 3.4 or lower and can suppress the formation of precipitates even if the beverage comprises these components. Any kinds of protein, peptide, and amino acid which are usually used for beverages may be used for the beverage according to the present embodiment.

Protein, peptide, and amino acid may be, for example, collagen, gelatin, collagen peptide, collagen-derived amino acid, or the combination thereof. These components are preferable because they are expected to have a positive effect on bones and/or joints. The total content of collagen, gelatin, collagen peptide, and collagen-derived amino acid in the beverage according to the present embodiment may be, for example, 1.0 mass% or greater, is preferably 2.0 mass% or greater, more preferably 3.0 mass% or greater, and further preferably 4.0 mass% or greater. The total content of collagen, gelatin, collagen peptide, and collagen-derived amino acid in the beverage according to the present embodiment may be, for example, 10 mass% or less, 8.0 mass% or less, or 6.0 mass% or less.

Among collagen, gelatin, collagen peptide, and collagen-derived amino acid, preferably gelatin, collagen peptide, and/or collagen-derived amino acid are/is used, and more preferably collagen peptide is used in view of solubility in the beverage and viscosity adjustment of the beverage. The weight average molecular weight of gelatin may be, for example, 20,000 to 100,000. The weight average molecular weight of collagen peptide may be, for example, 2,000 to 20,000, is preferably 2,500 to 12,000, and more preferably 3,000 to 8,000. The smaller the average molecular weight of collagen peptide, the more likely it is to have good assimilability. The weight average molecular weight of the collagen peptide is measured by the gel filtration chromatography analyzing method with HPLC. Collagen peptide usually has a poor gelation ability, and thus an aqueous solution containing collagen peptide tends not to gelate even if the solution is cooled.

Collagen may be derived from any animal including mammals such as cattle, pigs, chicken, or fish. The type of the collagen peptide is not particularly limited, and may be, for example, type I, type II, and the like.

The beverage according to the present embodiment comprises phosphoric acid, malic acid and citric acid. Using the above three types of acids in combination allows pH of the beverage according to the present embodiment to be adjusted to 3.4 or lower, which is suitable for stabilizing glucosamine, also suppresses the formation of precipitates, reduces the acidic taste and suppresses bitterness and astringency of the beverage to make the taste better.

The content of phosphoric acid in the beverage according to the present embodiment may be, for example, 0.2 to 3.0 mass%, is preferably 0.5 to 2.5 mass%, more preferably 0.6 to 2.0 mass%, further preferably 0.8 to 1.5 mass%, and still further preferably 0.8 to 1.2 mass%. When the content of phosphoric acid is 3.0 mass% or less, the bitterness can be further reduced.

The content of malic acid in the beverage according to the present embodiment may be, for example, 0.2 to 2.0 mass%, is preferably 0.3 to 1.5 mass%, more preferably 0.4 to 1.0 mass%, and further preferably 0.5 to 0.7 mass%. When the content of malic acid is 2.0 mass% or less, the astringency can be further reduced.

The content of citric acid in the beverage according to the present embodiment may be, for example, 0.05 to 1.0 mass%, is preferably 0.1 to 0.7 mass%, and more preferably 0.1 to 0.5 mass%. When the content of citric acid is 1.0 mass% or less, the formation of precipitates can be further suppressed.

The content of phosphoric acid in the beverage according to the present embodiment may be, for example, 40 to 70 mass%, is preferably 45 to 65 mass%, and preferably 50 to 60 mass% with respect to the total content of phosphoric acid, malic acid, and citric acid. The content of malic acid in the beverage according to the present embodiment may be, for example, 20 to 50 mass%, is preferably 25 to 45 mass%, and more preferably 30 to 40 mass% with respect to the total content of phosphoric acid, malic acid, and citric acid. The content of citric acid in the beverage according to the present embodiment may be, for example, 3 to 20 mass%, is preferably 5 to 18 mass%, and more preferably 7 to 15 mass% with respect to the total content of phosphoric acid, malic acid, and citric acid. Setting the ratio of the above three types of acids to the above range allows the pH to be adjusted to an appropriate range, and also can suppress the formation of precipitates, and reduce the acidic taste, bitterness and astringency of the beverage and make the taste of the beverage better.

The beverage according to the present embodiment may also comprise other acids. Examples of the other acids include lactic acid, tartaric acid, acetic acid, ascorbic acid, succinic acid, gluconic acid, adipic acid, and glucono delta lactone.

The pH of the beverage according to the present embodiment is 3.4 or less. A pH of 3.4 or less may keep glucosamine or a salt thereof contained in the beverage stable for a long time. It is preferable that the pH of the beverage is 3.3 or less. The pH of the beverage may be, for example, 2.0 or greater, and is preferably 3.0 or greater. A pH of 3.0 or greater further improves the taste of the beverage. It is preferable that the pH of the beverage is 3.1 to 3.3.

It is preferable that the beverage according to the present embodiment comprises a sweetener. When the beverage comprises a sweetener, the taste of the beverage can be improved. The sweetener may be a natural sweetener or an artificial sweetener, for example, such as saccharide, sugar alcohol, high intensity sweeteners, honey, maple syrup, corn syrup, starch hydrolysate, and dextrin. Examples of saccharide include sugar, isomerized glucose syrup, glucose, fructose, maltose, lactose, and trehalose. Examples of sugar alcohol include xylitol, sorbitol, erythritol, mannitol, maltitol, palatinit (trade name, reducing isomaltulose), lactitol, straight chain oligosaccharide alcohol, branched chain oligosaccharide alcohol, and reduced starch syrup. Examples of high intensity sweeteners include sucralose, acesulfame K, stevia extract, aspartame, neotame, advantame, sodium saccharin, thaumatin, extract of *Siraitia grosvenorii*, and licorice extract. Such a sweetener may be used alone, or in combination of two or more types. The content of the sweetener may be, for example, 0.01 to 1 mass%, or 0.02 to 0.1 mass%. The beverage according to the present embodiment may not comprise sugar, or may not comprise saccharide.

It is preferable that the beverage according to the present embodiment comprises a high intensity sweetener as a sweetener. The sweetener may be, for example, a combination of sucralose, stevia extract and acesulfame K. When the beverage according to the present embodiment comprises sucralose, the content of the sucralose may be 0.01 to 0.08 mass% or 0.01 to 0.05 mass%. When the beverage according to the present embodiment comprises stevia extract, the content of the stevia extract may be, for example, 0.01 to 0.05 mass% or 0.01 to 0.03 mass%. When the beverage according to the present embodiment comprises acesulfame K, the content of the acesulfame K may be 0.005 to 0.02 mass% or 0.008 to 0.015 mass%.

The beverage according to the present embodiment may comprise a vitamin. Examples of vitamins include vitamin B1 (thiamine), vitamin B2 (riboflavin), vitamin B3 (nicotinic acid or nicotinamide), vitamin B5 (pantothenic acid), vitamin B6 (pyridoxine, pyridoxal P or pyridoxamine), vitamin B8 (biotin), vitamin B9 (folic acid), vitamin B12 (cobalamin), vitamin C (ascorbic acid), vitamin K3 (menadione), vitamin K2 (menaquinone), vitamin K1 (phylloquinone), vitamin E (α-tocopherol, or d-tocopherol), and vitamin D such as vitamin D2 and vitamin D3. In particular, vitamin D facilitates the absorption of calcium, and thus is preferably used in the beverage according to the present embodiment. When the beverage comprises a vitamin, the content of the vitamin may be, for example, 0.01 to 0.1 mass%, or 0.01 to 0.05 mass%.

The beverage according to the present embodiment may comprise a flavor, a coloring such as a caramel pigment, an antioxidant, a preservative, emulsifier, thickening stabilizer, gelling agent, mineral, fruit juice, plant extract, tea extract, coffee extract, milk component ingredient, and the like, which are usually used in a beverage. The content of lipid in the beverage according to the present embodiment may be, for example, less than 0.5 g per 10 ml. It is preferable that the beverage according to the present embodiment does not comprise lipid.

The beverage according to the present embodiment may have a viscosity of, for example, 100 to 10,000 mPa·s, 10 to 100 m Pa·s, or 10 mPa·s or less at 20 °C. The beverage according to the present embodiment may comprise a gelling agent and may not comprise a gelling agent.

The beverage according to the present embodiment may have, for example, 20 to 200 kcal, 30 to 100 kcal, or 35 to 50 kcal per 100 ml.

In an embodiment, the beverage is packaged. The volume of the packaged beverage may be, for example, 50 to 100 ml, is preferably 50 to 80 ml, and more preferably 60 to 70 ml. The volume of the packaged beverage may be, for example, 63 ml. The smaller the volume, the smaller the burden on drinkers to drink and thus more preferable. Preferably, the packaged beverage can be stored at room temperature. The package may be, for example, a PET bottle, a paper pack, and a glass bottle.

The content of glucosamine or the salt thereof in the packaged beverage according to the present embodiment may be 1,250 mg or greater, or 1,500 mg or greater per package in terms of glucosamine. The content of glucosamine or the salt thereof may be, for example, 2,000 mg or less per package in terms of glucosamine.

The content of calcium in the packaged beverage according to the present embodiment may be 100 to 200 mg, 150 to 200 mg, or 170 to 190 mg per package.

The content of the collagen peptide in the packaged beverage according to the present embodiment may be 2,000 to 4,000 mg, 2,500 to 3,500 mg, 2,800 to 3,200 mg, or 2,900 to 3,100 mg per package.

In an embodiment, the volume of the packaged beverage is 50 to 100 ml, and the beverage comprises 1,250 mg or greater of glucosamine or a salt thereof in terms of glucosamine, 180 mg or greater of calcium, and 3,000 mg or greater of collagen peptide.

The beverage according to the present embodiment may be a Food with Health Claims such as a Food with Function Claims, a Food for Specified Health Uses, or a Food with Nutrient Function Claims. The beverage may be a health food, a nutrient composition, a functional food, a nutritional supplement, a supplement, or the like.

The beverage according to the present embodiment may be labeled with, for example, "for those who are anxious for articular cartilage", "inhibiting degradation of type II collagen", "for those who want to make a motion smoothly", "for those who want to be smooth", "supporting cushions of body", "want to keep walking actively every day", "enabling to take glucosamine, collagen, and calcium in simultaneously."

Subjects who drink the beverage according to the present embodiment are not particularly limited, and may be healthy persons excluding patients, in particular, the elderly. It is recommended to take one package of the packaged beverage according to the present embodiment per a day.

The beverage according to the present embodiment contains a high concentration of both glucosamine and calcium, and optionally collagen peptide. Thus, these components can be consumed in a small amount, and it is not a burden to take the beverage daily. The beverage according to the present embodiment may be in the form of a product that can be stored at room temperature.

The beverage according to the present embodiment may be obtained by, for example, mixing ingredients and adjusting the pH to a prescribed range. It is preferable that the beverage is packed after a heat treatment in a package. The heat treatment before packing may be carried out, for example, at 100 to 120°C for 1 to 60 seconds. A known method may be used for packing the beverage in a package. It is preferable to pack the beverage in an aseptic condition.

The packing of the beverage into a package may be carried out in the condition where the beverage is heated to 85 to 97°C. It is preferable that after packing the beverage in a package, a post sterilization is carried out. The post sterilization may be carried out, for example, at 65°C for 10 minutes. The packaged beverage product may be finally cooled to room temperature.

The beverage according to the present embodiment has an advantage that it contains a high concentration of glucosamine in a stable condition, contains a high concentration of calcium, forms few precipitates, and has a good taste. Accordingly, as an embodiment of the present invention, a method of stabilizing glucosamine in a beverage, a method of suppressing precipitation in the beverage, and/or a method of improving the taste of the beverage, wherein the beverage comprises 1.0 mass% or greater of glucosamine or a salt thereof in terms of glucosamine and 0.15 mass% or greater of calcium, are/is provided. These methods comprise: adjusting the pH of the beverage to 3.4 or lower; and incorporating phosphoric acid, malic acid and citric acid in the beverage.

### [Examples]

In the following, the present invention will be described in more detail with reference to Examples. However, the present invention is not limited to the following Examples.

### [Test Example 1]

Components of the proportion shown in the following Table 1 were mixed to prepare beverages of Example 1 and Comparative Example 1. The resulting beverages were heat-treated at 110°C for 10 seconds, then packed in a PET bottle at 90°C, and after closing the cap, the sterilization at low temperature was carried out at 65°C for 10 minutes.

**[Table 1]**

| | | Comparative Example 1 | Example 1 |
|---|---|---|---|
| Component | | Proportion (mass %) | Proportion (mass %) |
| Water | | 87.653 | 86.853 |
| Collagen peptide | | 4.900 | 4.900 |
| glucosamine hydrochloride | | 3.250 | 3.250 |
| Granules of calcium lactate | | 2.200 | 2.200 |
| Aqueous phosphoric acid solution (85%) | | - | 1.200 |
| DL-malic acid | | 1.200 | 0.600 |
| Anhydrous citric acid | | - | 0.200 |
| Caramel pigment | | 0.500 | 0.500 |
| Japanese plum flavor | | 0.200 | 0.200 |
| Sucralose | | 0.040 | 0.040 |
| Stevia extract | | 0.020 | 0.020 |
| Acesulfame K | | 0.010 | 0.010 |
| Vitamin D3 | | 0.017 | 0.017 |
| Sodium ascorbate | | 0.010 | 0.010 |
| Total | | 100% | 100% |
| pH | | 3.65 | 3.14 |
| Content of glucosamine (g/63g) | Immediately after production | 1550 | 1599 |
| | After 3 months' storage | 1246 | 1580 |

Details of the components used are as follows.
Collagen peptide: hydrolysate of pig gelatin, average molecular weight 5,000 available from Rousselot
Glucosamine hydrochloride: Trade name "Fermented glucosamine G" available from Kyowa Hakko Bio Co., Ltd.

The pH of the resulting packaged beverages was measured to be 3.14 in Example 1, and 3.65 in Comparative Example 1.

The resulting packaged beverages were stored at 37°C for 3 months. The content of glucosamine in the beverages immediately after production and after storage was measured by the following method (the Rondle-Morgan method). The results are shown in Table 1. In the beverage of Comparative Example 1 which had a pH of 3.65, the content of glucosamine reduced by about 20% after 3 months' storage. On the other hand, the beverage of Example 1 which had a pH of 3.14 maintained the high content of glucosamine even after 3 months' storage.

### Method of measuring content of glucosamine

100 ml of a 0.25 mol/l sodium carbonate solution and 2 ml of 2,4-pentanedione were mixed to prepare an acetylacetone reagent. Separately, 30 ml of 96% (v/v) ethanol, 30 ml of concentrated hydrochloric acid and 1.6 g of p-dimethylaminobenzaldehyde were mixed to prepare an Ehrlich reagent. A 100 mg/ml aqueous solution of glucosamine hydrochloride (purity 98% or greater) was prepared as a standard solution. The standard solution was diluted as needed to prepare a diluted standard solution for making a calibration curve.

1.0 ml of a sample solution or the standard solution, and the acetylacetone reagent were placed and mixed in a test tube with screw cap, and the mixture was heated at 90 to 100 °C for 20 minutes. The test tube after heating was cooled with water, and 6.0 ml of ethanol (purity 99.5% or greater) was added thereto and mixed. 1.0 ml of the Ehrlich reagent was also added thereto and mixed, and the resultant was heated at 65 to 70°C for 10 minutes. The test tube was then cooled with water, and the absorbance at 530 nm was measured to determine the content of glucosamine hydrochloride.

### [Test Example 2]

Each Component was dissolved in water so that the resultant contained 4.9 mass% of collagen peptide, 3.25 mass% of glucosamine hydrochloride, 2.2 mass% of calcium lactate, acids (an aqueous phosphoric acid solution (concentration 85 mass%), DL-malic acid, and anhydrous citric acid) in the concentration shown in Tables 2 and 3 (unit: mass%), 0.5 mass% of a pigment, 0.2 mass% of a flavor, sweeteners (0.04 mass% of sucralose, 0.02 mass% of stevia extract, 0.01 mass% of acesulfame K), 0.01 mass% of vitamin D3, and 0.01 mass% of sodium ascorbate. The resultant was heat-treated, packed and the sterilization at low temperature was carried out in the same manner as in Test Example 1 to prepare packaged beverages of Comparative Examples 2 to 17, and Example 2. The same components as those in Test Example 1 were used, respectively. The pH of all beverages was in the range of 3.0 to 3.4.

The prepared beverages were heated at 121 °C for 1 minute and immediately after that it was visually observed whether a precipitate was formed at the bottom of the package. Those with no precipitate were rated as "A," and those in which a precipitate was visually observed were rated as "B." The results are shown in Tables 2 and 3.

An organoleptic evaluation of the resulting packaged beverages was carried out by a panel consisting of five persons. The organoleptic evaluation was carried out for bitterness and astringency. For the evaluation item of bitterness, those with an acceptably low bitterness were rated as "A," and those with strong bitterness were rated as "B." For the evaluation item of the astringency, those with an acceptably weak astringency were rated as "A," and those with strong astringency were rated as "B." The results are shown in Tables 2 and 3. In Example 2 in which three types of acids were used in combination, formation of precipitate was not observed, and the results of the organoleptic evaluation were excellent for bitterness and astringency.

**[Table 2]**

| | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|
| Aqueous phosphoric acid solution (85%) | - | - | - | - | - | - | - | - |
| DL-malic acid | 1.2 | 1.6 | 1.8 | 2.2 | 0.7 | 0.5 | 0.3 | - |
| Anhydrous citric acid | 1.0 | 0.6 | 0.4 | - | 1.4 | 1.6 | 1.8 | 2.1 |
| Bitterness | A | A | A | A | A | A | A | A |
| Astringenc y | B | B | B | B | A | A | A | A |
| Precipitatio n | B | A | A | A | B | B | B | B |

**[Table 3]**

| | Comparati ve Example 10 | Comparati ve Example 11 | Comparati ve Example 12 | Comparati ve Example 13 | Comparati ve Example 14 | Comparati ve Example 15 | Comparati ve Example 16 | Comparati ve Example 17 | Exampl e 2 |
|---|---|---|---|---|---|---|---|---|---|
| Aqueous phosphoric acid solution (85%) | 1.9 | 1.6 | 1.4 | 1.3 | 1.2 | 1.1 | 1.0 | 1.2 | 1.2 |
| DL-malic acid | - | - | - | - | - | - | - | 0.8 | 0.6 |
| Anhydrous citric acid | - | 0.3 | 0.5 | 0.7 | 0.8 | 0.9 | 1.0 | - | 0.2 |
| Bitterness | B | B | B | B | A | A | A | A | A |
| Astringenc y | A | A | A | A | A | A | A | B | A |
| Precipitatio n | A | A | A | A | B | B | B | A | A |

## Claims

1. A beverage, comprising glucosamine or a salt thereof, calcium, phosphoric acid, malic acid, and citric acid,
wherein a content of glucosamine or the salt thereof is 1.0 mass% or greater in terms of glucosamine, a content of calcium is 0.15 mass% or greater, and pH of the beverage is 3.4 or lower.

2. The beverage according to claim 1, wherein the content of glucosamine or the salt thereof is 1.8 mass% or greater in terms of glucosamine.

3. The beverage according to claim 1 or 2, wherein the content of calcium is 0.25 mass% or greater.

4. The beverage according to any one of claims 1 to 3, further comprising one or greater components selected from the group consisting of protein, peptide, and amino acid.

5. The beverage according to any one of claims 1 to 3, further comprising one or more components selected from the group consisting of collagen, gelatin, collagen peptide, and collagen-derived amino acid.

6. The beverage according to claim 5, wherein the total content of the collagen, gelatin, collagen peptide, and collagen-derived amino acid is 4.0 mass % or greater.

7. The beverage according to any one of claims 1 to 6, wherein the pH of the beverage is 3.0 or higher.

8. The beverage according to any one of claims 1 to 7, wherein glucosamine or a salt thereof is glucosamine hydrochloride.

9. The beverage according to any one of claims 1 to 8, wherein a content of phosphoric acid is 0.2 to 3.0 mass%.

10. The beverage according to any one of claims 1 to 9, wherein a content of malic acid is 0.2 to 2.0 mass%.

11. The beverage according to any one of claims 1 to 10, wherein a content of citric acid is 0.05 to 1.0 mass%.

12. The beverage according to any one of claims 1 to 11, wherein the contents of phosphoric acid, malic acid, and citric acid are 40 to 70 mass%, 20 to 50 mass%, and 3 to 20 mass%, respectively, with respect to the total content of phosphoric acid, malic acid, and citric acid.

13. The beverage according to any one of claims 1 to 12, further comprising vitamin D.

14. The beverage according to any one of claims 1 to 13, wherein the beverage is packaged.

15. The beverage according to claim 14, comprising 1250 mg or greater of glucosamine or the salt thereof in terms of glucosamine, 180 mg or greater of calcium, and 3000 mg or greater of collagen peptide, wherein the volume of the beverage is 50 to 100 ml.
